# EUROPEAN PATENT APPLICATION

(11) **EP 4 831 833 A1**
(43) Date of publication of application: **28.10.2026**
(21) Application number: 24905645.8
(22) Date of filing: 02.09.2024
(51) Int. Cl.: G06F 16/332

(54) **INFORMATION PROCESSING METHOD, COMPUTING DEVICE, STORAGE MEDIUM, AND PROGRAM PRODUCT**

(30) Priority: 20.12.2023 CN 202311770727
(71) Applicant: Cloud Intelligence Assets Holding (Singapore) Private Limited, Singapore 189554 (SG)
(72) Inventor: LI, Feifei, Hangzhou, Zhejiang 310030 (CN); FU, Zhe, Beijing 100020 (CN); WANG, Sheng, Singapore 189554 (SG); LI, Yiran, Beijing 100020 (CN)
(74) Representative: Barker Brettell LLP
(86) International application number: PCT/CN2024/116418
(87) International publication number: WO 2025/130153

(57) **Abstract**

Embodiments of the present disclosure provide an information processing method, a computing device, a storage medium and a program product. Obtaining user input content; determining, in combination with user feature information and knowledge base feature information, a target knowledge base that is capable of being accessed by a user; searching the target knowledge base for target knowledge content matching the input content; and generating, according to the target knowledge content and the input content, feedback information by using a large language model. Technical solutions provided in the embodiments of the present disclosure improve accuracy of the large language model and ensure data security.

## Description

The present disclosure claims priority to Chinese Patent Application No. 202311770727.3, entitled "INFORMATION PROCESSING METHOD AND COMPUTING DEVICE" filed with the China National Intellectual Property Administration on December 20, 2023, which is incorporated herein by reference in its entirety.

### TECHNICAL FIELD

Embodiments of the present disclosure relate to the field of artificial intelligence technologies, and in particular, to an information processing method, a computing device, a storage medium, and a program product.

### BACKGROUND

With the development of technologies such as deep learning, big data, and cloud computing, various types of large-scale and pre-trained large language models are greatly improved, and question-answering systems based on the large language models are widely applied to domains such as customer service, health care, and education and training.

During training, the large language models are usually pre-trained by using large-scale data, and are adjusted by using a plurality of common instructions, to enable the large language models to easily communicate with human beings, so that the large language models can process various types of tasks, and the large language models have obvious advantages in performing general-domain tasks that require rich knowledge. However, for tasks in some specific professional domains, the general large language models still have some limitations due to a lack of vertical and professional domain knowledge.

### SUMMARY

Embodiments of the present disclosure provide an information processing method, a computing device, a storage medium, and a program product, to resolve a problem that accuracy of a large language model is low, and ensure data security.

According to a first aspect, an embodiment of the present disclosure provides an information processing method, and the method includes:
obtaining user input content;
determining, in combination with user feature information and knowledge base feature information, a target knowledge base that is capable of being accessed by a user;
searching the target knowledge base for target knowledge content matching the input content; and
generating, according to the target knowledge content and the input content, feedback information by using a large language model.

According to a second aspect, an embodiment of the present disclosure provides a computing device, including a processing component and a storage component, where
the storage component stores one or more computer instructions, and the one or more computer instructions are used for being invoked and executed by the processing component, to implement the information processing method according to the first aspect.

According to a third aspect, an embodiment of the present disclosure provides a computer-readable storage medium, storing computer programs, where the computer programs, when executed by a computer, implement the information processing method according to the first aspect.

According to a fourth aspect, an embodiment of the present disclosure provides a computer program product, including computer programs, where the computer programs, when executed by a processor, implement the information processing method according to the first aspect.

In the embodiments of the present disclosure, for user input content, a target knowledge base that is capable of being accessed by a user is first determined in combination with user feature information and knowledge base feature information; the target knowledge base is searched for target knowledge content matching the input content; and feedback information is generated according to the target knowledge content and the input content by using a large language model. Because the knowledge base has features, such as comprehensiveness, professionalism, and timeliness, the technical solutions of the embodiments of the present disclosure enhance the user input content, and can add more prior knowledge to the user input content, so that the obtained feedback information is more professional and accurate, thereby improving adaptability and accuracy of the large language model. In addition, because the target knowledge content is determined only in the target knowledge base that is capable of being accessed by the user, data security is improved.

These aspects or other aspects of the present disclosure will be clearer and easier to understand in the description of the following embodiments.

### BRIEF DESCRIPTION OF DRAWINGS

To illustrate embodiments of the present disclosure or technical solutions in the related art more clearly, the following briefly introduces accompanying drawings required for describing the embodiments or the related art. Apparently, the accompanying drawings in the following descriptions are some embodiments of the present disclosure, and a person of ordinary skill in the art may derive other drawings according to these accompanying drawings without creative efforts.
FIG. 1 shows a flowchart of an embodiment of an information processing method provided by the present disclosure.
FIG. 2 shows a flowchart of another embodiment of an information processing method provided by the present disclosure.
FIG. 3 shows a schematic diagram of scenario interaction of a technical solution according to an embodiment of the present disclosure in a practical application.
FIG. 4 shows a schematic structural diagram of an embodiment of an information processing apparatus provided by the present disclosure.
FIG. 5 shows a schematic structural diagram of an embodiment of a computing device provided by the present disclosure.

### DESCRIPTION OF EMBODIMENTS

To enable a person skilled in the art to better understand solutions of the present disclosure, the following clearly and completely describes technical solutions of embodiments of the present disclosure in combination with accompanying drawings in the embodiments of the present disclosure.

Some procedures described in the specification, claims and the foregoing accompanying drawings of the present disclosure include a plurality of operations that appear in a specific sequence. However, it should be clearly understood that, these operations may not be performed in the sequence presented in this specification or be performed in parallel. Sequence numbers of the operations such as 101 and 102 are merely used for distinguishing different operations, and the sequence numbers themselves do not indicate any execution sequence. In addition, these procedures may include more or fewer operations, and these operations may be performed in sequence or in parallel. It should be noted that, descriptions such as "first" and "second" in this specification are used for distinguishing different messages, devices, modules, and the like. These descriptions do not indicate a sequence, and nor do they limit "first" and "second" to being different types.

The technical solutions of the embodiments of the present disclosure may be applied to an application scenario of a large language model.

The large language model (Large Language Model, LLM for short) refers to a natural language processing model having an extremely large quantity of parameters and an extremely high computing capability, and may be applied to various types of natural language processing tasks, such as text generation, machine translation, and a question-answering system. In addition, the large language model is an artificial intelligence (Artificial Intelligence, AI) model.

In combination with the descriptions in the background, it can be learnt that, the large language model has excellent performance in performing a general-domain task, but in some specific professional domains, the large language model still has some disadvantages in terms of reliability, precision, and professionalism.

During implementation of the present disclosure, the inventors have found that, considering that the large language model cannot process a natural language task in a professional domain very well, knowledge of a specific professional domain may be integrated to fine-tune the large language model, thereby increasing adaptability of the large language model to the professional domain. However, because specific corpus data that is in the professional domain and that is annotated with high quality needs to be collected, data collection is difficult and costly, and the annotated data requires high professionalism, resulting in fine-tuning training being difficult and costly.

To improve adaptability and accuracy of the large language model, and improve applicability of the large language model, the inventors propose the technical solutions of the embodiments of the present disclosure after performing a series of research. In this embodiment of the present disclosure, there is no need to fine-tune the large language model by using a corpus in a professional domain. Target knowledge content matching user input content is determined by using a knowledge base, and the target knowledge content is used as auxiliary context information of the user input content. Because the knowledge base has characteristics, such as comprehensiveness, professionalism, and timeliness, the technical solutions of the embodiments of the present disclosure enhance the user input content, and can add more prior knowledge to the user input content, so that obtained feedback information is more professional and accurate, thereby improving adaptability and accuracy of the large language model. In addition, after performing further research, the inventors have found that, to ensure quality and a scale of the knowledge base, during actual application, the large language model integrates knowledge bases from different knowledge sources. However, multi-source heterogeneous knowledge brings security problems to these knowledge bases. Therefore, to improve data security while improving adaptability and accuracy of the large language model, in the embodiments of the present disclosure, a target knowledge base that is capable of being accessed by a user may be first determined according to user feature information and knowledge base feature information, so that the target knowledge content is determined only in the target knowledge base. In this way, a security requirement for the knowledge base is met, data security is improved, and secure sharing of the knowledge base is also ensured by distinguishing knowledge use permissions according to user identities.

The following clearly and completely describes the technical solutions of the embodiments of the present disclosure in combination with the accompanying drawings in the embodiments of the present disclosure. Obviously, the described embodiments are merely some rather than all of the embodiments of the present disclosure. All other embodiments obtained by a person skilled in the art based on the embodiments of the present disclosure without creative efforts shall fall within the protection scope of the present disclosure.

It should be noted that, the embodiments of the present disclosure may involve the use of user data. During actual application, user-specific personal data may be used in the solutions described in this specification within the scope permitted by applicable laws and regulations, under the condition of meeting the requirements of the applicable laws and regulations in the country (for example, the user explicitly agrees, and the user is effectively informed, etc.).

It should be noted that, user information (including but not limited to user device information and user personal information) and data (including but not limited to data used for analysis, stored data, and displayed data) involved in the present disclosure are both authorized by a user or fully authorized by all parties, and collection, use, and processing of related data need to comply with related laws, regulations, and standards of related countries and regions, and a corresponding operating entry is provided for the user to accept or reject the authorization.

It should be noted that, the technical solutions of the embodiments of the present disclosure are applicable to a network virtual environment. The described user generally refers to a "virtual user". A real user may register a user account at a server side through registration, to obtain a user identity in the network environment.

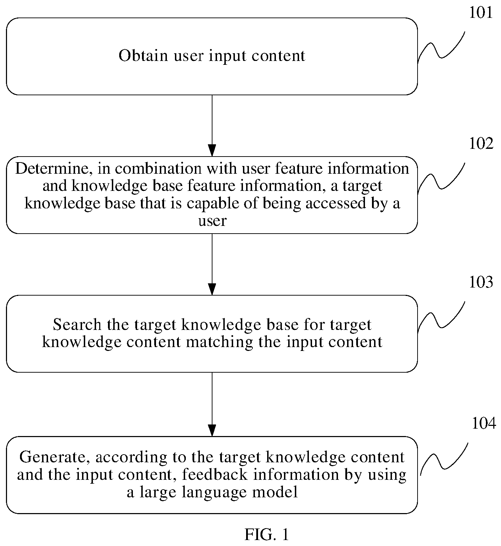

FIG. 1 is a flowchart of an embodiment of an information processing method provided by an embodiment of the present disclosure. During actual application, the technical solutions of this embodiment of the present disclosure may be applied to an information processing system including a user end and a server side. The user end may perceive user input content, and the server side is configured to invoke a large language model for processing.

A connection is established between the user end and the server side through a network. The network provides a medium of a communication link between the user end and the server side. The network may include various connection types, such as, a wired communication link, a wireless communication link, or a fiber optic cable. Through the network, the user end may interact with the server side to receive or send information, or the like.

During actual application, the user end may be a browser, APP (Application, application), a web application such as an H5 (HyperText Markup Language 5, hypertext markup language 5) application, a light application (also referred to as a mini program, a lightweight application), a cloud application, or the like. The user end may be deployed in an electronic device, and the user end needs to rely on the device, some apps in the device, or the like for running. The electronic device, for example, may have a display screen and may support information browsing, and may be a personal mobile terminal, such as a mobile phone, a tablet computer, a personal computer, a desktop computer, a smart speaker, or a smart watch. Usually, the electronic device may also be configured with various other types of applications, such as a man-machine dialog application, a model training application, a text processing application, a web browser application, a shopping application, a search application, an instant messaging tool, an email client, and social platform software. The electronic device may refer to a device that is used by a user and that has functions required by the user, such as computing, network access, and communication, and may be, for example, a mobile phone, a tablet computer, a personal computer, and a wearable device. The electronic device may usually include at least one processing component and at least one storage component. The electronic device may also include basic configurations such as a network interface card chip, an IO bus, and an audio and video component. This is not limited in the present disclosure. Optionally, according to an implementation form of the electronic device, some peripherals such as a keyboard, a mouse, an input pen, and a printer may also be included. This is not limited in the present disclosure.

The server side may include servers providing various types of services, and the like. It should be noted that, the server side may be implemented as a distributed server cluster including a plurality of servers, or may be implemented as a single server. The server may also be a server of a distributed system, or a blockchain-integrated server. The server may also be a cloud server that provides a basic cloud computing service such as a cloud service, a cloud database, cloud computing, a cloud function, cloud storage, a network service, cloud communication, a middleware service, a domain name service, a security service, a content delivery network (Content Delivery Network, CDN), big data, and an artificial intelligence platform, or an intelligent cloud computing server or an intelligent cloud host that has an artificial intelligence technology.

The technical solutions of this embodiment may be specifically performed by the server side, and certainly, in another implementation, may also be performed by the user end. The large language model trained by the server side may be deployed on the user end, and more timely processing is provided by the user end. This is not limited in the present disclosure. The information processing method may include the following steps:
101: Obtain user input content.
102: Determine, in combination with user feature information and knowledge base feature information, a target knowledge base that is capable of being accessed by a user.

A knowledge base (Knowledge base) is a special database used for knowledge management, to facilitate collection, organization, and extraction of knowledge in a related domain, is a data storage and organization manner, and is used for storing, managing, and retrieving structured and unstructured data. The knowledge base usually includes content such as a document, a picture, an audio, a video, and a web page, and may be retrieved, filtered, sorted, categorized, and the like by the user.

In the technical solutions of this embodiment of the present disclosure, the system may include a plurality of knowledge bases. The plurality of knowledge bases may be provided by one or more knowledge base providers. The plurality of knowledge bases correspond to different knowledge sources. Therefore, the target knowledge base that is capable of being accessed by the user may be determined in the plurality of knowledge bases from the different knowledge sources in combination with the user feature information and the knowledge base feature information.

In other words, in this embodiment of the present disclosure, the knowledge bases from the different knowledge sources may be integrated, for example, professional data from a plurality of departments in an organization is aggregated; or external knowledge from different enterprises, organizations, individuals, or the like is integrated; or domain knowledge from different domains such as healthcare and education and training is integrated, which may lead to a case in which the knowledge sources are dispersed and permission attributes are different. If these knowledge bases are integrated into an integral knowledge base, a risk of data leakage exists. After performing research, the inventors have found that, for example, in a same organization, data of a department A can only be shared within the organization, but data of a department B can be open to the outside. In addition, different employees in the same organization should also be granted with different access permissions according to different levels. Therefore, to improve data security, in this embodiment of the present disclosure, the target knowledge base that is capable of being accessed by the user may be first determined in combination with the user feature information and the knowledge base feature information, to determine the target knowledge base to which the user has an access permission. A quantity of target knowledge bases may be at least one.

There are a plurality of implementations to determine, in combination with the user feature information and the knowledge base feature information, the target knowledge base that is capable of being accessed by the user, which are described in detail in the following embodiments.

103: Search the target knowledge base for target knowledge content matching the input content.

104: Generate, according to the target knowledge content and the input content, feedback information by using the large language model.

In this embodiment of the present disclosure, the target knowledge base is searched for the target knowledge content matching the input content, and the target knowledge content may be used as context information of the input content, so that auxiliary information of the input content may be provided, to enable the feedback information generated by the large language model to be more accurate.

Optionally, first prompt information may be generated according to the target knowledge content and the input content, and the first prompt information is input into the large language model, to obtain the feedback information.

Prompt information (prompt) is an input form, and is used for prompting or guiding the large language model to provide an output satisfying an expectation. The prompt information is used for indicating what action should be taken or what output should be generated by the large language model when the large language model performs a specific task. The prompt information is a type of natural language input, which is similar to a command or an instruction, and is used for making the large language model know what the large language model needs to do.

Optionally, the target knowledge content and the input content may be filled in a prompt template, to generate the first prompt information. A target prompt template may be, for example, "Please answer a user's question 'XX' according to the following background knowledge 'AA'". The part "AA" is used for filling in the target knowledge content, and the part "XX" is used for filling in the input content, that is, the first prompt information may be generated. The target knowledge content may be used as background knowledge of the input content, to provide required knowledge for the large language model, so that a factual error of the large language model in reasoning is reduced, and a powerful understanding capability and a powerful reasoning capability of the large language model are fully exploited, to improve accuracy of the large language model, thereby improving user experience.

The large language model in this embodiment of the present disclosure may be, for example, GPT-3 (Generative Pre-trained Transformer-3, the third-generation generative pre-trained model), GPT-4 (Generative General Pre-trained Transformer-4, the fourth-generation generative pre-trained model), BERT (Bidirectional Encoder Representation from Transformers, a bidirectional encoder model based on transformers), Turing NLG (Turing Natural language Generation, turing natural language generation), and the like. The large language model may be widely applied to domains such as customer service, healthcare, and education and training. For example, an intelligent customer service robot constructed based on the large language model can automatically process various types of service consultation questions of a user; an intelligent question-answering system in a healthcare domain constructed based on the large language model may assist a doctor in answering a question of a patient; and intelligent education software constructed based on the large language model may answer a learning doubt of a student based on the knowledge base. These applications use a powerful natural language processing capability of the pre-trained large language model, which significantly improves question-answering experience and efficiency. However, during actual application, for example, patient knowledge involved in the healthcare domain usually has a certain privacy. Therefore, the technical solutions of this embodiment of the present disclosure may grant an access permission to different users, so that a knowledge scope that can only be accessed by the user includes only a knowledge base that the user has a permission to access. In this way, the large language model may summarize and provide an answer according to knowledge content that the user can access, which not only can ensure accuracy of the large language model, but also can ensure that the user cannot access knowledge to which the user has no access permission, thereby avoiding data leakage and ensuring data security.

As an optional implementation, the user feature information may include a user identifier; the knowledge base feature information may include a knowledge base identifier; and the determine, in combination with user feature information and knowledge base feature information, a target knowledge base that is capable of being accessed by a user may include:
searching a first permission mapping relationship according to the user identifier and the knowledge base identifier, to determine the target knowledge base to which the user has the access permission, where the first permission mapping relationship is used for indicating whether the user has the access permission to the knowledge base.

The first permission mapping relationship may be preset, and is used for indicating whether the user has the access permission to the knowledge base.

In some embodiments, the first permission mapping relationship between the user and different knowledge bases may be determined according to a first determining result indicating whether the user meets first access requirements separately configured for the different knowledge bases, and the first permission mapping relationship is stored.

In other words, a knowledge base provider may provide the knowledge bases and perform configuration operations. The first access requirements may be configured by the knowledge base provider for the knowledge bases. If the user meets a first access requirement of any knowledge base, it may be considered that the user has a permission to access the knowledge base. Otherwise, it may be considered that the user has no permission to access the knowledge base. The first permission mapping relationship may be correspondingly stored according to the user identifier and the knowledge base identifier.

In addition to the user identifier, the user feature information may further include at least one attribute feature, such as a user name, an affiliated organization, a grade, a position, registration time, age, and gender.

Therefore, whether the user meets the first access requirements separately configured for the different knowledge bases may be determined in combination with the user identifier and/or the at least one attribute feature.

In some embodiments, the first permission mapping relationship between the user and the different knowledge base providers may also be defined according to user registration information, and the first permission mapping relationship is stored.

The user registration information may be generated when the user submits a registration request. In an implementation, the user feature information may include the user registration information, and the user registration information may include the user identifier, the one or more attribute features, and the like in the foregoing user feature information.

The first permission mapping relationship between the user and the different knowledge bases may be defined by searching for a correspondence that is between different user registration information and the different knowledge bases and that is preconfigured by the system, and the first permission mapping relationship is stored.

In addition, the user registration information may further include an expected knowledge base identifier, so that a knowledge base indicated by the expected knowledge base identifier may be determined, in combination with the expected knowledge base identifier, to be the knowledge base that the user has a permission to access, and the like.

The first permission mapping relationship may be stored through a relational database, for example, may be represented through a permission table. The permission table may include fields such as a user identifier, a knowledge base identifier, and whether there is a permission, so that the first permission mapping relationship between different users and the different knowledge bases is stored into the permission table.

Certainly, in the relational database, other information may also be stored through other data tables. For example, a user table is used for storing user-related information, and may include fields such as a user identifier, a user name, user information addition time, and user information update time. For another example, a knowledge base table is used for storing knowledge base-related information, and may include fields such as a knowledge base identifier, a knowledge base name, knowledge base information addition time, knowledge base information update time, and a first access requirement.

In addition, the first permission mapping relationship may also be marked by using another type of database such as a key-value database. This is not limited in the present disclosure.

As another optional manner, the user feature information may include a user identifier, and the knowledge base feature information may include a knowledge base identifier; and the determine, in combination with user feature information and knowledge base feature information, a target knowledge base that is capable of being accessed by a user may include:
searching for a second permission mapping relationship according to the user identifier and the knowledge base provider identifier, to determine a target knowledge base provider to which the user has an access permission; and using at least one knowledge base provided by the target knowledge base provider as the target knowledge base.

The second permission mapping relationship is used for indicating whether the user has the access permission to the knowledge base provider.

During actual application, one knowledge base provider may provide one or more knowledge bases. In this embodiment of the present disclosure, a permission mapping relationship between the user and the knowledge base provider may be preset. If a user has a permission to access a knowledge base provider, the user may access all knowledge bases provided by the knowledge base provider.

In some embodiments, the second permission mapping relationship between the user and the knowledge base provider may be determined according to a second determining result indicating whether the user meets a second access requirement corresponding to any knowledge base provider, and the second permission mapping relationship is stored.

The knowledge base provider may provide the knowledge base and perform configuration operations. The second access requirement may be configured by the knowledge base provider for itself. If the user meets the second access requirement of any knowledge base provider, it may be considered that the user has a permission to access all the knowledge bases provided by the knowledge base provider. Otherwise, it may be considered that the user has no permission to access any knowledge base provided by the knowledge base provider. The second permission mapping relationship may be correspondingly stored according to the user identifier and the knowledge base provider identifier, and the second permission mapping relationship is used for indicating whether the user has the permission to access the knowledge base provider, and the like.

In addition to the user identifier, the user feature information may further include at least one attribute feature, such as a user name, an affiliated organization, a grade, a position, registration time, age, and gender.

Therefore, whether the user meets the second access requirements separately configured by different knowledge base providers may be determined in combination with the user identifier and/or the at least one attribute feature.

In addition, in some embodiments, the second permission mapping relationship between the user and the different knowledge base providers may be further defined according to user registration information, and the second permission mapping relationship is stored.

The user registration information may be created when the user submits a registration request. In an implementation, the user feature information may include at least some information in the user registration information. For example, the user registration information may include the user identifier, the one or more attribute features, or the like in the foregoing user feature information.

The second permission mapping relationship between the user and the different knowledge base providers may be defined by searching for a correspondence that is between different user registration information and the different knowledge base providers and that is preconfigured by the system, and the second permission mapping relationship is stored.

The second permission mapping relationship may be stored through a relational database, for example, the second permission mapping relationship may be represented through a knowledge base provider table. The knowledge base provider table may include fields such as a user identifier, a knowledge base provider identifier, and whether there is a permission, so that the second permission mapping relationship between different users and the different knowledge base providers is stored into the knowledge base provider table.

In addition, the second permission mapping relationship may also be stored by using another type of database such as a key-value database. This is not limited in the present disclosure.

In another optional manner, the user feature information may include a user identifier and/or at least one attribute feature; and the knowledge base feature information may include a knowledge base identifier, a knowledge base provider identifier, a first access requirement corresponding to a knowledge base, a second access requirement corresponding to a knowledge base provider to which the knowledge base belongs, and the like.

The at least one attribute feature may be, for example, one or more of a user name, an affiliated organization, a user grade, a position, age, and gender.

The determine, in combination with user feature information and knowledge base feature information, a target knowledge base that is capable of being accessed by a user may include:
determining, in combination with the user feature information, whether the user meets at least one determining condition of a first access requirement corresponding to any knowledge base and a second access requirement corresponding to any knowledge base provider; and
separately using, as the target knowledge base, at least one knowledge base corresponding to the first access requirement met by the user feature information, and/or at least one knowledge base provided by the knowledge base provider for which the user feature information meets the second access requirement.

In other words, in this embodiment of the present disclosure, the first permission mapping relationship or the second permission mapping relationship may be determined in advance based on the first access requirement or the second access requirement, or the like. Whether the user has an access permission to a knowledge base or a knowledge base provider may be determined by searching for the first permission mapping relationship or the second permission mapping relationship based on the user identifier and the knowledge base identifier.

Certainly, the target knowledge base that is capable of being accessed by the user may also be determined in real time based on the first access requirement or the second access requirement.

It can be learnt from the foregoing several optional manners that, the first access requirement or the second access requirement may be configured and obtained by the knowledge base provider. Therefore, in some embodiments, the apparatus may further include:
sending first registration prompt information to the knowledge base provider; and generating knowledge base registration information according to a first registration request sent by the knowledge base provider.

The knowledge base registration information may include a knowledge base identifier, a knowledge base name, a knowledge base provider identifier to which a knowledge base belongs, the foregoing first access requirement and/or second access requirement, and the like. The knowledge base feature information may include the knowledge base registration information.

In some embodiments, the method may further include:
sending second registration prompt information to the user end; and creating the user registration information according to a registration request sent by the user end.

The user registration information may include the user identifier, and the like. The user feature information may include the user registration information.

In some embodiments, the foregoing first access requirement or the foregoing second access requirement may include one or more of the following access conditions:
having a configured predetermined user identifier;
having one or more configured predetermined attribute features;
   and
within permission validity time periods separately set by the foregoing one or more access conditions.

In other words, the knowledge base provider may configure a knowledge base development scope by using the user identifier or the attribute feature. For example, if the user has a user identifier X set by the knowledge base provider, the user can access all the knowledge bases of the knowledge base provider. For another example, if the user has an attribute feature 1 and an attribute feature 2 that are set by the knowledge base provider for a knowledge base A, for example, the position of the user is a general manager and the user belongs to a product department, the user can access the knowledge base A. For another example, if the user has an attribute feature 1 and an attribute feature 2 that are set by the knowledge base provider for a knowledge base A, and the access condition is within the permission validity time period, it may be considered that the user can access the knowledge base A.

In addition, in still another optional manner, the determine, in combination with user feature information and knowledge base feature information, a target knowledge base that is capable of being accessed by a user may include:
using a knowledge base whose matching degree between the knowledge base feature information and the user feature information meets a matching requirement as the target knowledge base that is capable of being accessed by the user.

The knowledge base feature information and the user feature information may be separately vectorized and converted into vector features, and then a vector distance is calculated to determine the matching degree. For example, the matching degree may be greater than a predetermined value.

Certainly, a matching model may also be used to calculate the matching degree between the knowledge base feature information and the user feature information, and the like. The matching model may be obtained in advance by training according to sample knowledge base feature information and sample user feature information matching the sample knowledge base feature information, and the like.

When the knowledge base that is capable of being accessed by the user exists, the input content may be directly input into the large language model to obtain the feedback information.

In addition, when the knowledge base that is capable of being accessed by the user does not exist, to further improve accuracy of the large language model, in some embodiments, the method may further include:
invoking, based on the input content when a determining result of the target knowledge base is empty, at least one search engine to perform a network search; extracting target search content from a search result; and obtaining, according to the target search content and the input content, feedback information of the input content by using the large language model.

In other words, at least one search engine may be invoked in a network search manner based on the input content to perform the search. The search result may include a plurality of web page links, and the target search content may be extracted from web page content corresponding to at least one web page link of the plurality of web page links.

Second prompt information may be generated according to the target search content and the input content. The second prompt information may be processed by using the large language model, to obtain the feedback information of the input content.

The target search content and the input content may be input into the prompt template, to generate the second prompt information.

In this embodiment of the present disclosure, data in an entire network may be searched, and the target search content, when combined therewith, may be used as auxiliary information of the input content, thereby improving processing accuracy of the large language model.

In addition, when the knowledge base that is capable of being accessed by the user does not exist, to further improve accuracy of the large language model, in some embodiments, the method may further include:
recognizing, when a determining result of the target knowledge base is empty, target intent corresponding to the input content by using an intent recognition model; and obtaining, according to the target intent and the input content, feedback information of the input content by using the large language model.

In other words, in this embodiment of the present disclosure, the target intent corresponding to the input content may be recognized, and the target intent is used as context information of the input content, to improve processing accuracy of the large language model.

Third prompt information may be generated according to the target intent and the input content. The third prompt information is processed by using the large language model, to obtain the feedback information of the input content.

The target intent and the input content may be filled in a preset prompt template to generate the third prompt information.

In addition, in some embodiments, the method may further include:
recognizing, when a determining result of the target knowledge base is empty, target intent corresponding to the input content by using an intent recognition model;
invoking, based on the input content when the determining result of the target knowledge base is empty, at least one search engine to perform a network search; extracting target search content from a search result; and
generating, according to the target search content, the target intent, and the input content, the feedback information by using the large language model.

Fourth prompt information may be generated according to the target search content, the target intent, and the input content, and the fourth prompt information is processed by using the large language model, to obtain the feedback information of the input content.

The target search content and the target intent may be simultaneously used as context information of the input content, and more prior knowledge is added to the input content, so that the obtained feedback information is more accurate, thereby improving accuracy of the large language model for assisting.

In addition, in some embodiments, after the target knowledge content matching the input content is searched out and obtained from the target knowledge base, the input content may be enhanced by combining the target search content and the target intent. Therefore, the feedback information may be generated, according to the target knowledge content, the target search content, the target intent, and the input content by using the large language model.

In some embodiments, the search the target knowledge base for target knowledge content matching the input content may include:
converting the input content into a feature vector; and performing a similarity search in vector data corresponding to knowledge base content of the target knowledge base with the feature vector, to determine target knowledge content corresponding to target vector data meeting a similar requirement with the feature vector.

In other words, the target knowledge content can be determined from the target knowledge base by using a vector retrieval technology.

The knowledge content in the knowledge base can be converted into the vector data in advance and is stored in a vector database, so that the vector database can be searched for the target vector data matching the feature vector, and then the target knowledge content corresponding to the vector data is determined in the knowledge base.

Similarities between the feature vector and different vector data may be determined by calculating a vector distance, or in another manner. A similar requirement, for example, may be that the similarity is greater than a specified threshold.

The vector data may be obtained by first converting the knowledge content into a text format, segmenting the knowledge content into a plurality of text blocks by using a word segmentation technology, and then vectorizing each of the text blocks, to obtain a vector form of each of the text blocks. The text blocks, corresponding numeric vectors, and related information of the text blocks such as text to which the text blocks belong and a vector base, may be correspondingly stored in the vector database. Therefore, corresponding target knowledge content is determined according to text to which a text block belongs, where the text block corresponds to the target vector data meeting the similar requirement with the feature vector.

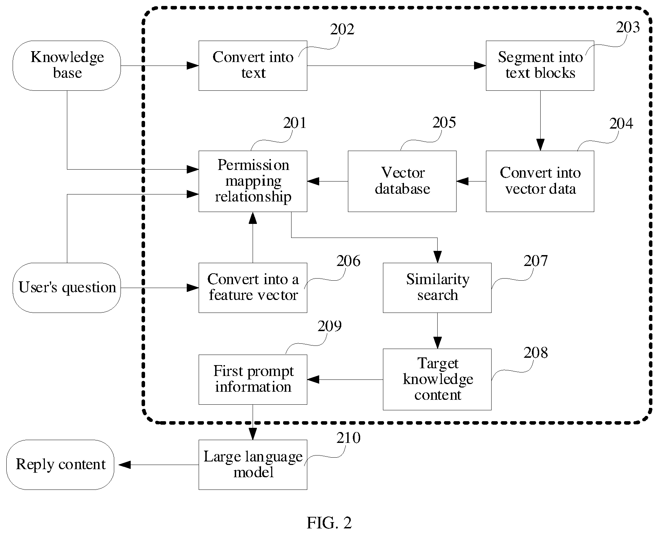

During actual application, the technical solutions of this embodiment of the present disclosure may be applied to an intelligent question-answering scenario. In this scenario, user input content is user question content, and feedback information is reply content produced by a large language model. FIG. 2 shows a schematic diagram of processing of a technical solution during actual application according to an embodiment of the present disclosure. A permission mapping relationship 201 (a first permission mapping relationship and/or a second permission mapping relationship) with a user may be first determined based on a knowledge base provided by a knowledge base provider.

Subsequently, knowledge content in the knowledge base may be converted into text 202 whose text format is a format such as TXT (Text, text); the text is segmented into file blocks 203, and each text block may include, for example, 50 to 1000 words or symbols; then each text block may be vectorized, and content of each of the file blocks is converted into vector data 204 in a vector form; and text blocks, corresponding vector data, and related information of the text blocks are stored into a vector database 205.

Before the user asks a question, registration may be first performed, to generate user registration information, so that the foregoing permission mapping relationship may be determined in combination with the user registration information, knowledge base feature information, and the like.

Subsequently, the user question content is obtained. The user question content may be vectorized and converted into a corresponding feature vector 206.

Subsequently, a target knowledge base to which the user has an access permission may be first determined based on the permission mapping relationship, and vector data corresponding to the target knowledge base is obtained from the vector database. Next, a similarity search 207 may be performed between the feature vector and the vector data corresponding to the target knowledge base, to find target vector data having a high semantic similarity, so as to determine target knowledge content 208 corresponding to the target vector data.

Content of the target knowledge base and the user question content may be input into a template, to generate first prompt information 209 that is finally input into the large language model.

After the first prompt information is input into the large language model 210, reply content may be obtained accordingly.

The foregoing manner of vectorizing the input content or the knowledge content may be implemented by using, for example, a one hot model (One Hot Model), a bag of words model (Bag of Words Model), a term frequency-inverse document frequency (TF-IDF), an N-gram (N-Gram) model, a word-vector model (Word2vec), or a document-vector model (Doc2vec). This is not specifically limited in the present disclosure.

In some embodiments, obtaining user input content may be obtaining the user input content sent by a user end.

After the feedback information is generated by using the large language model, the method may further include: sending the feedback information to the user end, to present the feedback information on the user end.

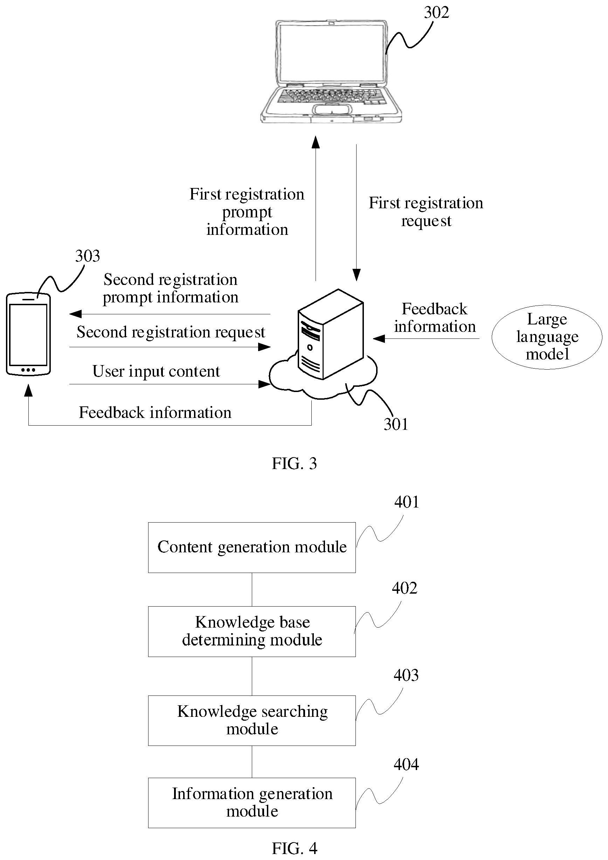

For ease of understanding, FIG. 3 shows a schematic diagram of scenario interaction of a technical solution according to an embodiment of the present disclosure in a practical application.

A server side 301 may send first registration prompt information to a client side 302. The client side 302 may be oriented toward a knowledge base provider. The knowledge base provider may perform a registration operation, a configuration operation, and the like based on the first registration prompt information, and send a first registration request to the server side 301. The server side 301 may generate knowledge base registration information according to the first registration request, and knowledge base feature information may include at least some information in the knowledge base registration information, and the like.

The server side 301 may send second registration prompt information to a user end 303. A user may perform a registration operation, a configuration operation, and the like based on the second registration prompt information, and send a second registration request to the server side 301. The server side 301 may generate user registration information according to the second registration request, and user feature information may include at least some information in the user registration information.

The user end 303 may receive user input content, and send the user input content to the server side 301.

The server side 301 may determine, in combination with the user feature information and the knowledge base feature information, a target knowledge base that is capable of being accessed by the user, and search the target knowledge base for target knowledge content matching the input content, and then may invoke a large language model to generate feedback information according to the target knowledge content and the input content. For a specific execution operation of the server side 301, refer to descriptions in the foregoing corresponding embodiments, for example, the descriptions in the embodiment shown in FIG. 2. Details are not repeated herein.

The feedback information generated by the server side 301 may be sent to the user end 303, to present the feedback information to the user on the user end 303, and an intelligent question-answering operation is completed.

In some embodiments, to further improve data security, and the like, the determine, in combination with the user feature information and the knowledge base feature information, a target knowledge base that is capable of being accessed by the user may include:
importing the input content into a trusted execution environment; and
performing the determine, in combination with the user feature information and the knowledge base feature information, a target knowledge base that is capable of being accessed by the user in the trusted execution environment.

Searching the target knowledge base for target knowledge content matching the input content is searching the target knowledge base for the target knowledge content matching the input content in the trusted execution environment.

Generating, according to the target knowledge content and the input content, feedback information by using a large language model may be generating, according to the target knowledge content and the input content, the feedback information in the trusted execution environment by using the large language model.

Certainly, vectorization of the knowledge content and vectorization of the user input content described above may also be performed in the trusted execution environment.

In addition, the method may further include: exporting the feedback information from the trusted execution environment. Therefore, the feedback information may be sent to the user end for the user to view, and the like.

The trusted execution environment may be, for example, a sandbox created in a device system; or the trusted execution environment may be created based on a CPU-integrated security unit, for example, may be created by Intel SGS (Intel^{®} Software Guard Extensions, intel software guard extensions), an ARM Trustzone (an embedded platform security technology), or an AMD PSP (AMD Platform Security Processor, platform security processor); or may be created by an external secure element (SE, Secure Element) configured in a device, or the like. This is not specifically limited in the present disclosure.

The trusted execution environment may be a running environment that coexists with an operating system, and may be independently run in the device, to ensure data security and code security in the trusted execution environment, and an objective of isolating data and code from an external execution environment is achieved. The external execution environment in this specification may refer to the operating system of the device.

In the technical solutions of this embodiment of the present disclosure, in combination with the knowledge content of the knowledge base, accuracy of the large language model is improved, and hallucination that is inconsistent with the input content or a fact is avoided. In addition, a permission mapping relationship between different knowledge bases and different users may be further defined, so that a knowledge scope that can be obtained when a user asks a question includes only a knowledge base that the user has a permission to access. The large language model summarizes answers of the question according to content of the knowledge base that is capable of being accessed by the user, to ensure that the user cannot access knowledge to which the user has no permission, thereby avoiding data leakage and ensuring data security.

FIG. 4 is a schematic structural diagram of an embodiment of an information processing apparatus provided by an embodiment of the present disclosure, and the apparatus may include:
a content obtaining module 401, configured to obtain user input content;
a knowledge base determining module 402, configured to determine, in combination with user feature information and knowledge base feature information, a target knowledge base that is capable of being accessed by a user;
a knowledge searching module 403, configured to search the target knowledge base for target knowledge content matching the input content; and
an information generation module 404, configured to generate, according to the target knowledge content and the input content, feedback information by using a large language model.

In some embodiments, the user feature information includes a user identifier; the knowledge base feature information includes a knowledge base identifier; the foregoing knowledge base determining module is specifically configured to search for a first permission mapping relationship according to the user identifier and the knowledge base identifier, to determine the target knowledge base to which the user has the access permission; and the first permission mapping relationship is used for indicating whether the user has the access permission to the knowledge base.

In some embodiments, the apparatus may further include:
a first relationship determining module, configured to determine the first permission mapping relationship between the user and different knowledge bases according to a first determining result indicating whether the user meets first access requirements separately configured for the different knowledge bases, and store the first permission mapping relationship; or configured to define the first permission mapping relationship between the user and different knowledge bases according to user registration information, and store the first permission mapping relationship.

In some embodiments, the user feature information includes a user identifier; the knowledge base feature information includes a knowledge base provider identifier; and the foregoing knowledge base determining module is specifically configured to search for a second permission mapping relationship according to the user identifier and the knowledge base provider identifier, to determine a target knowledge base provider to which the user has an access permission, where the second permission mapping relationship is used for indicating whether the user has the access permission to the knowledge base provider; and use at least one knowledge base provided by the target knowledge base provider as the target knowledge base.

In some embodiments, the apparatus may further include:
a second relationship determining module, configured to determine the second permission mapping relationship between the user and the knowledge base provider according to a second determining result indicating whether the user meets a second access requirement corresponding to any knowledge base provider, and store the second permission mapping relationship.

Alternatively, the second relationship determining module is configured to define the second permission mapping relationship between the user and different knowledge base providers according to user registration information, and store the second permission mapping relationship.

In some embodiments, the user feature information includes a user identifier and/or at least one attribute feature; the knowledge base feature information includes a knowledge base identifier, a knowledge base provider identifier, a first access requirement corresponding to the knowledge base, and a second access requirement corresponding to a knowledge base provider to which the knowledge base belongs; and
the foregoing knowledge base determining module is specifically configured to determine, in combination with the user feature information, whether the user meets at least one determining condition of a first access requirement corresponding to any knowledge base and a second access requirement corresponding to any knowledge base provider; and separately use, as the target knowledge base, at least one knowledge base corresponding to the first access requirement met by the user feature information, and/or at least one knowledge base provided by a knowledge base provider for which the user feature information meets the second access requirement.

In some embodiments, the apparatus may further include:
a first registration module, configured to send first registration prompt information to the knowledge base provider; and
generate knowledge base registration information according to a first registration request sent by the knowledge base provider, where the knowledge base registration information includes the first access requirement and/or the second access requirement.

In some embodiments, the apparatus may further include:
a second registration module, configured to send second registration prompt information to a user end; and create the user registration information according to a registration request sent by the user end, where the user feature information includes at least some information in the user registration information.

In some embodiments, the first access requirement or the second access requirement includes one or more of the following access conditions:
having a configured predetermined user identifier;
having one or more configured predetermined attribute features;
   and
within a permission validity time period set by the foregoing one or more access conditions.

In some embodiments, the foregoing knowledge base determining module may be specifically configured to use a knowledge base whose matching degree between the knowledge base feature information and the user feature information meets a matching requirement as the target knowledge base that is capable of being accessed by the user.

In some embodiments, the foregoing information generation module is specifically configured to generate first prompt information according to the target knowledge content and the input content; and input the first prompt information into the large language model, to obtain the feedback information.

In some embodiments, the apparatus may further include:
a first processing module, configured to invoke, based on the input content when a determining result of the target knowledge base is empty, at least one search engine to perform a network search; extract target search content from a search result; and obtain, according to the target search content and the input content, feedback information of the input content by using the large language model.

In some embodiments, the apparatus may further include:
recognizing, when the determining result of the target knowledge base is empty, target intent corresponding to the input content by using an intent recognition model; and obtaining, according to the target intent and the input content, the feedback information of the input content by using the large language model.

In some embodiments, the foregoing knowledge searching module is specifically configured to convert the input content into a feature vector; and
perform a similarity search in vector data corresponding to knowledge base content of the target knowledge base with the feature vector, to determine target knowledge content corresponding to target vector data meeting a similar requirement with the feature vector.

In some embodiments, the apparatus may further include:
a security execution module, configured to import the input content into a trusted execution environment, where the knowledge base is deployed in the trusted execution environment.

The foregoing knowledge base determining module is specifically configured to execute, in the trusted execution environment, the determine, in combination with user feature information and knowledge base feature information, a target knowledge base that is capable of being accessed by a user.

The apparatus may further include: an information export module, configured to export the feedback information from the trusted execution environment.

The information processing apparatus shown in FIG. 4 can perform the information processing method described in the embodiment shown in FIG. 1. Its implementation principles and technical effects are not described herein again. A specific manner in which each module and each unit of the information processing apparatus in the foregoing embodiments perform an operation is described in detail in the embodiments related to the method, and details are not described herein.

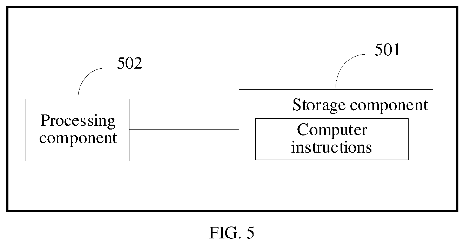

An embodiment of the present disclosure further provides a computing device. As shown in FIG. 5, the computing device may include a storage component 501 and a processing component 502.

The storage component 501 stores one or more computer instructions, where the one or more computer instructions are invoked and executed by the processing component 502, to implement the information processing method described in the embodiment shown in FIG. 1.

Certainly, the computing device may necessarily further include other components, such as, an input/output interface, a display component, a communication component, and the like.

The input/output interface provides an interface between the processing component and a peripheral interface module, and the foregoing peripheral interface module may be an input device, an output device, or the like. The communication component is configured to facilitate wired or wireless communication between the computing device and other devices, and the like.

The processing component may include one or more processors to execute the computer instructions, to complete all or some steps in the foregoing methods. Certainly, the processing component may also be implemented by one or more application-specific integrated circuits (ASIC), digital signal processors (DSP), digital signal processing devices (DSPD), programmable logic devices (PLD), field programmable gate arrays (FPGA), controllers, microcontrollers, microprocessors, or other electronic components, and is configured to perform the foregoing methods.

The storage component is configured to store various types of data to support operations at a terminal. The storage component may be implemented by any type of volatile or nonvolatile storage device or a combination thereof, for example, a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

The display component may be an electroluminescent (EL) element, a liquid crystal display, or a micro display having a similar structure, or a retina direct display, or a similar laser scanning display.

It should be noted that, when the foregoing computing device is deployed on a server side, the computing device may be a physical device, an elastic computing host or the like provided by a cloud computing platform. The computing device may be implemented as a distributed cluster including a plurality of servers or terminal devices, or may be implemented as a single server or a single terminal device.

When the foregoing computing device is deployed on a user end, the computing device may be specifically implemented as an electronic device. The electronic device may refer to a device that is used by a user and that has functions required by the user, such as computing, network access, and communication, and may be, for example, a mobile phone, a tablet computer, a personal computer, or a wearable device.

An embodiment of the present disclosure further provides a computer-readable storage medium, storing computer programs, where the computer programs, when executed by a computer, may implement the information processing method described in the embodiment shown in FIG. 1. A computer-readable medium may be included in the electronic device described in the foregoing embodiments; or the computer-readable medium may exist alone, and is not assembled into the electronic device.

An embodiment of the present disclosure further provides a computer program product, including computer programs carried on a computer-readable storage medium, where the computer programs, when executed by a computer, may implement the information processing method described in the embodiment shown in FIG. 1. In such an embodiment, the computer program may be downloaded and installed from a network, and/or installed from a removable medium. When the computer program is executed by a processor, various functions defined in a system of the present disclosure are performed.

It should be noted that, the embodiments of the present disclosure may involve the use of user data. During actual application, user-specific personal data may be used in the solutions described in this specification within the scope permitted by applicable laws and regulations, under the condition of meeting the requirements of the applicable laws and regulations in the country (for example, the user explicitly agrees, and the user is effectively informed, etc.).

A person skilled in the art can clearly understand that, for convenience and conciseness of description, for specific working processes of the foregoing systems, apparatuses and units, reference may be made to the corresponding processes in the foregoing method embodiments, and details are not described herein again.

The foregoing described apparatus embodiments are merely examples. The units described as separate parts may or may not be physically separate, and the components displayed as units may or may not be physical units, which may be located in one position or may be distributed on a plurality of network units. Some or all of the modules may be selected based on actual requirements to achieve the objectives of the solutions of embodiments. A person of ordinary skill in the art may understand and implement the solutions of the embodiments without creative efforts.

Through the foregoing descriptions of the implementations, a person skilled in the art can clearly understand that each implementation may be implemented by using software in combination with a necessary universal hardware platform, and certainly, may alternatively be implemented by hardware. Based on such an understanding, the foregoing technical solutions essentially or the part contributing to the related art may be implemented in a form of a software product. The computer software product may be stored in a computer-readable storage medium, such as a ROM/RAM, a magnetic disk, or an optical disc, and includes several instructions for instructing a computer device (which may be a personal computer, a server, a network device, or the like) to perform the methods described in the embodiments or some parts of the embodiments.

Finally, it should be noted that, the foregoing embodiments are merely intended for describing the technical solutions of the present disclosure, but not for limiting the present disclosure. Although the present disclosure is described in detail in combination with the foregoing embodiments, a person of ordinary skill in the art should understand that: modifications may still be made to the technical solutions recorded in the foregoing embodiments or equivalent replacements may be made to some technical features thereof, and such modifications or replacements do not cause the essence of corresponding technical solutions to depart from the spirit and scope of the technical solutions in the embodiments of the present disclosure.

## Claims

1. An information processing method, comprising:
obtaining user input content;
determining, in combination with user feature information and knowledge base feature information, a target knowledge base that is capable of being accessed by a user;
searching the target knowledge base for target knowledge content matching the input content; and
generating, according to the target knowledge content and the input content, feedback information by using a large language model.

2. The method according to claim 1, wherein the user feature information comprises a user identifier; the knowledge base feature information comprises a knowledge base identifier; and the determining, in combination with user feature information and knowledge base feature information, a target knowledge base that is capable of being accessed by a user comprises:
searching a first permission mapping relationship according to the user identifier and the knowledge base identifier, to determine the target knowledge base to which the user has an access permission, wherein the first permission mapping relationship is used for indicating whether the user has the access permission to the knowledge base.

3. The method according to claim 2, further comprising:
determining the first permission mapping relationship between the user and different knowledge bases according to a first determining result indicating whether the user meets first access requirements separately configured for the different knowledge bases, and storing the first permission mapping relationship; or
defining the first permission mapping relationship between the user and different knowledge bases according to user registration information, and storing the first permission mapping relationship.

4. The method according to claim 1, wherein the user feature information comprises a user identifier; the knowledge base feature information comprises a knowledge base provider identifier; and the determining, in combination with user feature information and knowledge base feature information, a target knowledge base that is capable of being accessed by a user comprises:
searching a second permission mapping relationship according to the user identifier and the knowledge base provider identifier, to determine a target knowledge base provider to which the user has an access permission, wherein the second permission mapping relationship is used for indicating whether the user has the access permission to the knowledge base provider; and
using at least one knowledge base provided by the target knowledge base provider as the target knowledge base.

5. The method according to claim 4, further comprising:
determining the second permission mapping relationship between the user and the knowledge base provider according to a second determining result indicating whether the user meets a second access requirement corresponding to any knowledge base provider, and storing the second permission mapping relationship; or
defining the second permission mapping relationship between the user and different knowledge base providers according to user registration information, and storing the second permission mapping relationship.

6. The method according to claim 1, wherein the user feature information comprises a user identifier and/or at least one attribute feature; the knowledge base feature information comprises a knowledge base identifier, a knowledge base provider identifier, a first access requirement corresponding to the knowledge base, and a second access requirement corresponding to a knowledge base provider to which the knowledge base belongs; and the determining, in combination with user feature information and knowledge base feature information, a target knowledge base that is capable of being accessed by a user comprises:
determining, in combination with the user feature information, whether the user meets at least one determining condition of a first access requirement corresponding to any knowledge base and a second access requirement corresponding to any knowledge base provider; and
separately using, as the target knowledge base, at least one knowledge base corresponding to the first access requirement met by the user feature information, and/or at least one knowledge base provided by the knowledge base provider for which the user feature information meets the second access requirement.

7. The method according to claim 3, claim 5, or claim 6, further comprising:
sending first registration prompt information to the knowledge base provider; and
generating knowledge base registration information according to a first registration request sent by the knowledge base provider, wherein the knowledge base registration information comprises the first access requirement and/or the second access requirement.

8. The method according to claim 3, claim 5, or claim 6, further comprising:
sending second registration prompt information to a user end;
creating the user registration information according to a registration request sent by the user end, wherein the user feature information comprises at least some information in the user registration information.

9. The method according to claim 6, wherein the first access requirement or the second access requirement comprises one or more of the following access conditions:
having a configured predetermined user identifier;
having one or more configured predetermined attribute features;
and
within a permission validity time period set by the foregoing one or more access conditions.

10. The method according to any one of claims 1 to 9, further comprising:
invoking, based on the input content when a determining result of the target knowledge base is empty, at least one search engine to perform a network search;
extracting target search content from a search result; and
obtaining, according to the target search content and the input content, feedback information of the input content by using the large language model.

11. The method according to any one of claims 1 to 9, further comprising:
recognizing, when a determining result of the target knowledge base is empty, target intent corresponding to the input content by using an intent recognition model; and
obtaining, according to the target intent and the input content, feedback information of the input content by using the large language model.

12. The method according to any one of claims 1 to 11, wherein the searching the target knowledge base for target knowledge content matching the input content comprises:
converting the input content into a feature vector; and
performing a similarity search in vector data corresponding to knowledge base content of the target knowledge base with the feature vector, to determine target knowledge content corresponding to target vector data meeting a similar requirement with the feature vector.

13. The method according to any one of claims 1 to 12, further comprising:
importing the input content into a trusted execution environment, wherein
the determining, in combination with user feature information and knowledge base feature information, a target knowledge base that is capable of being accessed by a user comprises:
performing the determining, in combination with user feature information and knowledge base feature information, a target knowledge base that is capable of being accessed by a user in the trusted execution environment; and
after the generating feedback information by using a large language model, the method further comprises:
exporting the feedback information from the trusted execution environment.

14. A computing device, comprising a processing component and a storage component, wherein
the storage component stores one or more computer instructions, and the one or more computer instructions are used for being invoked and executed by the processing component, to implement the information processing method according to any one of claims 1 to 13.

15. A computer-readable storage medium, storing computer programs, wherein the computer programs, when executed by a computer, implement the information processing method according to any one of claims 1 to 13.

16. A computer program product, comprising computer programs, wherein the computer programs, when executed by a processor, implement the information processing method according to any one of claims 1 to 13.
